# EUROPEAN PATENT APPLICATION

(11) **EP 1 175 037 A2**
(43) Date of publication of application: **23.01.2002**
(21) Application number: 01112851.9
(22) Date of filing: 31.05.2001
(51) Int. Cl.: H04L 9/32

(54) **Preventing ID spoofing with ubiquitous signature certificates**

(30) Priority: 09.06.2000 US 210463 P; 01.09.2000 US 229336 P; 30.03.2001 US 823701; 09.06.2000 US 210524 P
(71) Applicant: TRW Inc., Redondo Beach, California 90278 (US)
(72) Inventor: Aull, Kenneth W., Fairfax, VA 22030 (US)
(74) Representative: Schmidt, Steffen J., Dipl.-Ing.

(57) **Abstract**

A technique for preventing ID spoofing by hackers with ubiquitous signature certificates includes allowing a user to access a registration server. Upon the registration server receiving identification information from the user and also receiving a request by the user for a new signature certificate, the registration server queries a directory to obtain information regarding the identified user. Upon the registration server receiving information from the directory indicating that the identified user already possesses a signature certificate, the registration server informs the user that a new signature certificate will not be issued until the old signature certificate has been revoked, thereby preventing an unauthorized user from ID spoofing to obtain a valid signature certificate. Furthermore, upon the registration server receiving information from the directory indicating that the identified user is not in the directory, the registration server informs the user that a signature certificate will not be issued.

## Description

### BACKGROUND OF THE INVENTION

### 1. Field of the Invention

The present invention relates to digital signature certificates in a PKI (Public Key Infrastructure) more particularly, the present invention relates to preventing ID spoofing by hackers in a PKI system.

### 2. Description of the Related Art

A PKI is a set of policies, procedures, and software that permit an organization to generate, issue, and manage public/private cryptographic keys in a manner that allows users to reliably determine the identity of the owner of each public/private key pair. The key components of a PKI include: (1) a mechanism for reliably conveying the identity of a key pair's owner to the end user; (2) software applications for generating and managing key pairs that support this mechanism; (3) a set of procedures for generating and revoking key pairs that ensures that the identity of the owner can be reliably determined; and (4) a set of policies defining who may obtain public/private key pairs and identifying how each pair may be used.

As to component (1) of a PKI, most PKIs establish that the user owns a key pair by using an electronic document called a digital certificate. Digital certificates contain information identifying the owner of the key pair, the public component of the pair, and the period of time for which the certificate is valid. The digital certificate also identifies technical information about the key itself, such as the algorithm used to generate the key and the key length.

Certificates are generated by organizations that are responsible for verifying the identity of individuals, or in some instances, other organizations to which certificates are being issued. The identity of the certifying organization, referred to as a certificate authority, is recorded in each certificate, which is then signed using a private key known only to the certificate authority itself. This allows users to verify both the integrity of the certificate and the identity of the authority that issued it.

Certificate authorities generally employ any of a number of different commercially available software products to manage the creation, renewal, and revocation of certificates. These Certificate Management Systems (CMS) take information obtained through the user registration process, create a certificate, and sign it with the certificate authority's private key. The applicable CMS software maintains a database of all of the certificates that it has issued, and their statuses. The CMS is also responsible for revoking certificates, and for publishing a certificate revocation list that identifies the date on which each certificate was revoked, and the reason for the revocation. This information allows relying users (that is, those individuals or systems that are performing encryption or signature verification actions based on certificates) to review the status of a certificate, to assess its usability. A list of distribution points from which the CRL can be obtained are identified in the certificate itself.

In issuing a certificate, a certificate authority is stating that is has verified that the public key that appears in the certificate (and, by extension, the corresponding private key) belongs to the individual listed in the certificate. The integrity with which the registration process operates is therefore of great importance. The process must provide mechanisms for reliably identifying an individual and for verifying that the public key listed in the certificate belongs to that individual. Equally important, the certificate authority must provide procedures for revoking certificates in the event that the private key is compromised. A compromised private key calls into question the entire basis for trusting a certificate, since more than one individual may be using that private key to sign documents, or more than one individual may be able to decrypt documents encrypted using the corresponding public key.

Relying individuals and organizations must have a clear understanding of their certificate authority's operation processes. As a result, most certificate authorities publish a Certificate Practice Statement (CPS) that details the processes for registering users, issuing certificates, renewing certificates and revoking certificates. The CPS is normally published on the certificate authority's website.

Certificates often contain additional information that identifies an individual as a member of a particular organization and perhaps the role that they play in the organization. For example, the certificate may identifying the certificate holder as being either an employee of a company or a customer or subcontractor or supplier of the company. The policies determining who is eligible to hold a certificate are therefore important if individuals and organizations are to rely upon this information. These policies govern the overall operation of the certificate authority.

In other disadvantageous PKI systems, a problem arises in that ID spoofing, that is, attempts by hackers to attack the PKI system, often occurs. Since a digital signature system is a mechanism for the indicating user identities online, one form of attack by hackers is to commandeer the identity of a current user while a second form of attack by hackers is to generate a fictitious user. Unfortunately, other disadvantageous PKI systems are vulnerable to such attacks.

### SUMMARY OF THE INVENTION

An object of the present invention is to provide a technique for preventing ID spoofing in a PKI system.

Another object of the present invention is to provide a technique for preventing ID spoofing by hackers who commandeer the identity of a current user or who generate a fictitious user in order to gain access to a PKI system.

Still another object of the present invention is to provide a technique for preventing ID spoofing by allowing a user to access a registration server and upon the registration server receiving identification information from the user and also receiving a request by the user for a new signature certificate, the registration server querying a directory to obtain information regarding the identified user. Upon the registration server receiving information from the directory indicating that the identified user already possesses a signature certificate, the registration server informs the user that a new signature certificate will not be issued until the old signature certificate has been revoked, thereby preventing an unauthorized user from ID spoofing to obtain a valid signature certificate.

Even still another object of the present invention is to provide a technique as above in which, upon the registration server receiving information from the directory indicating that the identified user is not in the directory, the registration server informs the user that a signature certificate will not be issued.

### BRIEF DESCRIPTION OF THE DRAWINGS

The foregoing and a better understanding of the present invention will become apparent from the following detailed description of example embodiments and the claims when read in connection with the accompanying drawings, all form a part of the disclosure of this invention. While the foregoing and following written and illustrated disclosure focuses on disclosing example embodiments of the invention, it should be clearly understood that the same as by way of illustration and example only and the invention is not limited thereto. The spirit and scope of the present invention are limited only by the terms of the appended claims.

The following represents a brief description of the drawings, wherein:

FIG. 1 is a block diagram illustrating an exemplary architecture of a network in which the PKI processes of the present invention may be practiced.

FIG. 2 is a partial block diagram illustrating ID spoofing by hackers in other disadvantageous PKI systems.

FIG. 3 is a block diagram illustrating an example of preventing ID spoofing by hackers in a PKI system in accordance with the present invention.

### DETAILED DESCRIPTION

Before beginning a detailed description of the subject invention, mention of the following is in order. When appropriate, like reference numerals and characters may be used to designate identical, corresponding, or similar components in differing drawing figures. Furthermore, in the detailed description to follow, example sizes/models/values/ranges may be given, although the present invention is not limited thereto. Lastly, well-known components and connections have not been shown within the drawing figures for simplicity of illustration and discussion and so is not to obscure the invention.

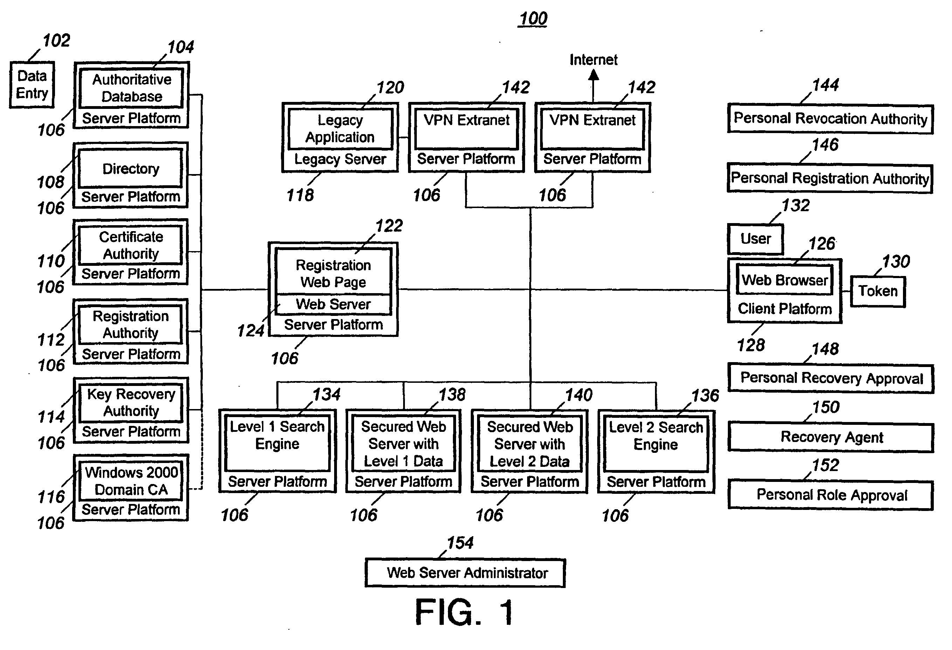

Fig. 1 illustrates an exemplary architecture of a network 100 in which the Public Key Infrastructure (P.K.I) processes of the present invention may be practiced. However, it should be understood that the present invention is not limited to the network 100 of FIG. 1. The network 100 includes data entry 102, which performs a data entry function for authoritative database 104, which is resident on the server platform 106. A server platform 106 is referred to in this description, but it should be understood that the present invention is not limited to any particular server architecture. The server platform 106 may be, without limitation, a UNIX or Windows NT server. The authoritative database 104 contains information about members of the group or enterprise for which PKI services in accordance with the present invention are performed. The present invention is not limited by the structure of the group enterprise for which information is stored in the authoritative database 104. The authoritative database 104 information includes, without limitation, the name, address, telephone numbers, manager's name, employee identification, etc., of the members of the group or enterprise. Directory 108 has the structure of the database but is optimized for fast look-up of information stored therein rather than fast data entry. The data in the directory 108 is not changed frequently but is required to be accessed rapidly and functions on-line as a fast phone book, containing reference information about the members of the group or enterprise stored in the authoritative database 104. Certificate authority 110 is off-the-shelf software executed on server platform 106, providing storage of certificates and related information used by the present invention as described in more detail hereinafter. Registration authority 112 is also off-the-shelf software executable on server platform 106 regarding registration performed by the present invention as described in more detail hereinafter. Key authority 114 is also off-the-shelf server software which is executable on server platform 106 for recovering keys from members of the group or enterprise as described in more detail hereinafter. Windows 2000 Domain CA 116 may use certificates provided by the present invention for a single sign-on to the network 100 of FIG. 1. Legacy server 118 executes legacy application programs 120. The legacy server may be, without limitation, a main frame, mini-computer, workstation, or other server hosting legacy software applications that are designed to be run on PKI processes in accordance with the present invention. The legacy applications 120 are accessible on the client side by a custom client 128 such as an emulator or custom database Graphic User Interface (GUI). Examples of emulators are terminal emulators of an IBM 3270 or terminal emulators of a vt 100. Registration web page 122, which may be one or more pages, functions as the user interface to the network 100 of Fig. 1. Web server 124 is a software application which serves Web Pages, such as Web Page 122 or other HTML outputs, to a web browser client which may be, without limitation, Apache or a Microsoft Internet Information Server. Web browser 126 is resident on client platform 128 which may be any user computer. Web browser 126 is a client software application for browsing web pages such as but not limited to HTML or XML protocols or other protocols. The Web browser 126 is programmed to operate with PKI certificates issued by the certificate authority 110. Examples of web browsers which have this capability are Netscape Navigator and the Microsoft Internet Explorer. The token 130 is a smart card, USB (United Serial Bus), or other hardware token capable of generating, storing, and using PKI certificates. A user 132 is a person using the network 100. A user 132 transitions through a number of states which include a new user, current user, and a former user who no longer is a member of the group or enterprise. The network 100 is described with reference to two levels of security, but the number of the levels of security is not a limitation of the present invention, with each level corresponding to a different security requirement. The level 1 search engine 134 is a search engine which is permitted to search through the network 100 but is allowed access to only level 1 data, which is the lowest level of security and may be, without limitation, data which is freely distributable. Level 2 data may be considered to be proprietary. Level 2 search engine 136 is a search engine which is allowed to search through both level 1 and level 2 data. A level N search engine (not illustrated) is a search engine which is allowed to search through servers possessing data levels 1 through N. A secured level server with level 1 data 138 is a Web server containing only level 1 data, which is secured so that users must have level 1 access (at least) to access the server. A secured Web server with level 2 data 140 is a Web server that contains level 2 data which has been secured so that users must have level 2 access, with level 2 users having access to both level 1 and level 2 servers. A secured Web server with level N data (not illustrated) is a Web server that contains level N data which is accessible by a user with level N or above access. VPN Extranet 142 is a software application which functions as a network gateway which, as illustrated, may be either to legacy server 118 and legacy application 120 or to an external network such as the Internet. Personal revocation authority 144 is a person who is in charge of revocation of members from the network 100. Personal registration authority 146 is a person who is in charge of registration of members in the network 100. Personal recovery approval 148 is a person in charge of obtaining recovery of certificates. A Recovery Agent 150 is a person who performs recovery of certificates and may only recover a certificate if the certificate has first been designated as recoverable by another person. Personal role approval 152 is a person who approves different role functions within the network 100. A Web server administrator is in charge of various web functions in the network 100.

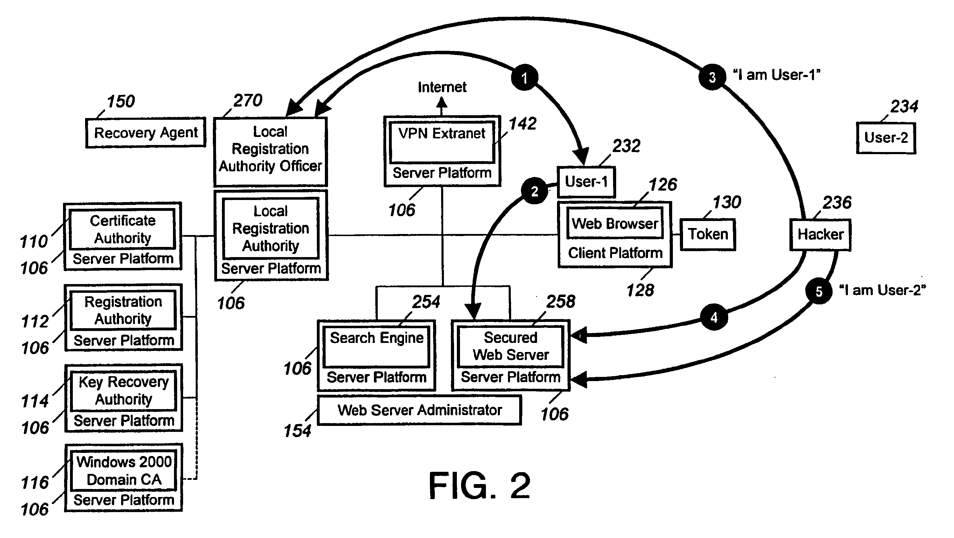

FIG. 2 is a partial block diagram illustrating ID spoofing by hackers in other disadvantageous PKI systems. For simplicity's sake, the search engines 134 and 136 of FIG. 1 have been replaced by the single search engine 254 and the secured Web servers 138 and 140 of FIG. 1 have been replaced by the single secured Web server 258.

In step 1 of FIG. 2, user-1 (232) obtains a signature certificate through a usual PKI process. In step 2, if user-1 attempts to access the secured Web server 258, it is necessary for user-1 to present its signature certificate to the secured Web server 258. The secured Web server 258 recognizes the signature certificate and grants access to user-1.

In step 3 of FIG. 2, a hacker 236 impersonates user-1 and requests a signature certificate from the Local Registration Authority Officer 270. Since other disadvantageous PKI systems do not enforce a rule allowing only one signature certificate for user, a signature certificate is given to the hacker 236.

In step 4 of FIG. 2, the hacker 236 may now effect an unauthorized access to secured Web server 258 since the hacker now has a valid user-1 signature certificate. Thus, the other disadvantageous PKI system has failed to prevent unauthorized access to a secured Web server.

Alternatively, this other disadvantageous PKI system may enforce a rule allowing only one signature certificate per user, but does not require all users to have a signature certificate. In such a case, in step 5 of FIG. 2, the hacker 236 requests a signature certificate as user-2 instead and is provided with a signature certificate since user-2 does not already have a signature certificate. Again, the hacker 236 is subsequently granted access to the secured Web server 258 since it is in possession of a valid signature certificate and again, the other disadvantageous PKI system has failed to prevent unauthorized access to a secured Web server.

In accordance with the present invention, it is necessary for the enterprise to have a practical method for identifying all of the members of the enterprise. That is, each member of the enterprise, for example, each user, has a unique identifier such as an employee number. An authoritative database of all such identifiers must be maintained in a timely and accurate matter.

Furthermore, in accordance with the present invention, every member of the enterprise must have a digital signature certificate. However, a member of the enterprise cannot have more than one digital signature certificate. Still furthermore, in accordance with the present invention, the enterprise must have a directory that identifies the one-to-one correspondence between the members (users) and their digital signature certificates.

In accordance with the present invention, when a hacker or other hostile user attempts to create a fictitious digital signature certificate, the enterprise directory is queried and if the hacker is attempting to create a new signature certificate for an existing user, then the attempt is prevented and if the hacker is attempting to create a signature certificate for a fictitious user, then this attempt is also prevented.

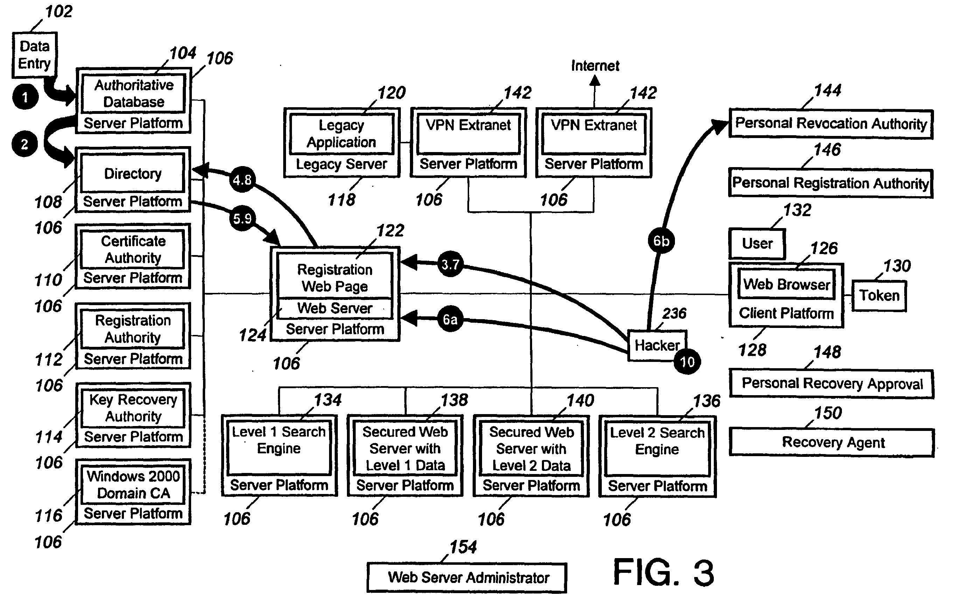

FIG. 3 is a block diagram illustrating an example of preventing ID spoofing by hackers in a PKI system in accordance with the present invention. In step 1 of FIG. 3, the authoritative database 104 is periodically updated via data entry 102 to accurately reflect the current population of the enterprise. In step 2 of FIG. 3, the authoritative database 104 periodically updates the directory 108 to ensure that the directory is accurate and current.

In step 3 of FIG. 3, a hacker 236 accesses the Web server 124 and identifies himself to the registration Web page 122 as a user in an unauthorized attempt to obtain a valid signature certificate. In step 4 of FIG. 3, the registration Web server 124 queries the directory 108 to obtain information about the user. In step 5, the directory 108, in response to the query by the Web server 124, provides information about the user to the Web server 124. More particularly, the directory 108 informs the Web server 124 that the user already possesses a signature certificate and further informs the Web server 124 that a new signature certificate will not be issued until the old signature certificate has been revoked. Thus, the hacker's unauthorized attempt to obtain a valid signature certificate is thwarted.

In step 6a, the hacker 236 accesses the Web server 124 in an attempt to revoke the previous signature certificate of the user. This attempt is thwarted since in accordance with the present invention, it is necessary to present the user's previous signature certificate in order to revoke it.

Alternatively, in step 6b, the hacker 236 attempts to impersonate the user and approaches the personal revocation authority 144 and requests the personal revocation authority 144 to revoke the user's previous signature certificate. However, this attempt is also thwarted since the personal registration authority 144 was specifically chosen so as to personally recognize the user (for example, the user's supervisor).

In step 7 of FIG. 3, the hacker 236 tries a different technique in his unauthorized attempt to obtain a valid signature certificate. Namely, the hacker 236 accesses the registration Web server 124 and erroneously identifies himself to the registration Web page 122 as a new user. In step 8 of FIG. 3, the registration Web server 124, in the same fashion as in step 4 above, queries the directory 108 to obtain information about the user. In step 9 of FIG. 3, the directory 108 provides information about the new user to the registration Web server 124. Namely, the directory 108 indicates to the registration Web server 124 that the user already possesses a signature certificate and that a new signature certificate will not be issued until the old signature certificate is revoked or alternatively, if the user does not exist in the directory 108, then the directory 108 informs the registration Web server 124 of this fact such that a new signature certificate is not issued. Thus, the hacker is once again thwarted in his unauthorized attempt to obtain a valid signature certificate.

This concludes the description of the example embodiments. Although the present invention has been described with reference to an illustrative embodiment thereof, it should be understood that numerous other modifications and embodiments can be devised by those skilled of the art that will fall within the spirit and scope of the principles of this invention. More particularly, reasonable variations and modifications are possible in the component parts and/or arrangements of the subject combination arrangement within the scope of the foregoing disclosure, the drawings, and the appended claims without departing from the spirit of the invention. In addition to variations and modifications in the component parts and/or arrangements, alternative uses will also be apparent to those skilled of the art.

For example, the particular arrangement of elements illustrated in the drawing figures is by no means unique. Furthermore, the various server platforms may either be combined or separated to suit specific needs. Still furthermore, one enterprise officer may serve more than one function or vice versa.

## Claims

1. A method of preventing ID spoofing comprising:
allowing a user to access a registration server;
upon the registration server receiving identification information from the user and also receiving a request by the user for a new signature certificate, the registration server querying a directory to obtain information regarding the identified user; and
upon the registration server receiving information from the directory indicating that the identified user already possesses a signature certificate, the registration server informing the user that a new signature certificate will not be issued until the old signature certificate has been revoked, thereby preventing an unauthorised user from ID spoofing to obtain a valid signature certificate.

2. A method of preventing ID spoofing comprising:
allowing a user to access a registration server;
upon the registration server receiving identification information from the user and also receiving a request by the user for a new signature certificate, the registration server querying a directory to obtain information regarding the identified user; and
upon the registration server receiving information from the directory indicating that the identified user is not in the directory, the registration server informing the user that a signature certificate will not be issued, thereby preventing an unauthorised user from ID spoofing to obtain a valid signature certificate.

3. The method of claim 2, further comprising providing user identifiers and their corresponding digital signature certificate in said directory.

4. The method of claim 2, further comprising providing an authoritative database including user identifiers, wherein the directory is updated from the authoritative database.

5. An apparatus for preventing ID spoofing comprising:
a registration server to allow access by a user;
a directory accessible by the registration server, the directory storing information regarding all users;
wherein, upon the registration server receiving information from the user and also receiving a request by the user for a new signature certificate, the registration server querying the directory to obtain information regarding the identified user; and
wherein, upon the registration server receiving information from the directory indicating that the identified user already possesses a signature certificate, the registration server informing the user that a new signature certificate will not be issued until the old signature certificate has been revoked, thereby preventing an unauthorised user from ID spoofing to obtain a valid signature certificate.

6. The apparatus of claim 5, further comprising a personal revocation authority to revoke a user's previous signature certificate, the personal revocation authority being chosen so as to personally recognise a user.

7. An apparatus for preventing ID spoofing comprising:
a registration server to allow access by a user;
a directory accessible by the registration server, the directory storing information regarding all users;
wherein, upon the registration server receiving information from the user and also receiving a request by the user for a new signature certificate, the registration server querying the directory to obtain information regarding the identified user; and
wherein, upon the registration server receiving information from the directory indicating that the identified user is not in the directory, the registration server informing the user that the user is not a valid member of the enterprise and not issue a signature certificate.

8. The apparatus of claim 6, wherein the directory includes identifiers and their corresponding digital signature certificates.

9. The apparatus of claim 6, further comprising an authoritative database including user identifiers, wherein the directory is updated from the authoritative database.

10. The apparatus of claim 6, further comprising a personal revocation authority to revoke a user's previous signature certificate, the personal revocation authority being chosen so as to personally recognise a user.
